# EUROPÄISCHE PATENTSCHRIFT

(11) **EP 3 009 823 B1**
(45) Veröffentlichungstag und Bekanntmachung des Hinweises auf die Patenterteilung: **20.02.2019**
(21) Anmeldenummer: 15190129.5
(22) Anmeldetag: 16.10.2015
(51) Int. Cl.: G01M 13/00, G01N 25/72, G01M 11/08

(54) **VERFAHREN UND VORRICHTUNG ZUR DETEKTION VON FEHLSTELLEN IN ROTORBLÄTTERN**
METHOD AND DEVICE FOR DETECTING DEFECTS IN ROTOR BLADES
PROCÉDÉ ET DISPOSITIF DE DÉTECTION D'ENDROITS DÉFECTUEUX DANS LES PALES DE ROTOR

(30) Priorität: 17.10.2014 DE 102014015322
(43) Veröffentlichungstag der Anmeldung: 20.04.2016
(73) Patentinhaber: Fraunhofer Gesellschaft zur Förderung der angewandten Forschung e.V., 80686 München (DE); Senvion SE, 22297 Hamburg (DE); GES Deutschland GmbH, 23769 Fehmarn (DE)
(72) Erfinder: Meinlschmidt, Peter, 38112 Braunschweig (DE); Hobbing, Geert, 18276 Plaaz (DE); Ruthe, Matthias, 23769 Fehmarn (DE)
(74) Vertreter: Stornebel, Kai

(56) Entgegenhaltungen:
- EP-A2- 2 752 621
- DE-B3-102007 059 502
- DE-B3-102010 046 493
- K Dickmann ET AL: "Laser ablation-and LIBS-ranging by webcam and image processing during laser cleaning" In: "Lasers in the Conservation of Artworks", 18. August 2008 (2008-08-18), CRC Press, XP055256295, ISBN: 978-0-203-88208-5 Seiten 127-131, DOI: 10.1201/9780203882085.ch20, * Seite 129, Spalte 1, Zeilen 5-8 * * Seite 129, Spalte 2, Zeilen 17-19 * * Abbildung 1 *
- MEINLSCHMIDT P ET AL: "Thermographic inspection of rotor blades", INTERNET CITATION, 26. September 2006 (2006-09-26), Seiten 1-9, XP002525987, ISSN: 1435-4934 Gefunden im Internet: URL:http://www.ndt.net/article/ecndt2006/d oc/Tu.1.5.3.pdf [gefunden am 2009-04-29]

## Beschreibung

Die Erfindung betrifft ein Verfahren zur Detektion von Fehlstellen in Rotorblättern, die in Laminatbauweise mit einem Lagenaufbau mit Fasermatten und/oder Sandwichmaterialien in einer Kunststoffmatrix hergestellt worden sind, wobei das Rotorblatt mit einem an dem Rotorblatt entlanggeführten Wärmestrahler lokal erwärmt wird, die erwärmte Stelle mit einer an dem Rotorblatt entlanggeführten Wärmebildkamera erfasst wird und die Ungleichmäßigkeiten in dem Wärmebild mit Methoden der Bildverarbeitung oder Signalanalyse ausgegeben werden. Die Erfindung betrifft ebenfalls eine Vorrichtung zur Detektion von Fehlstellen in Rotorblättern, die in Laminatbauweise mit einem Lagenaufbau mit Fasermatten und/oder Sandwichmaterialien mit einer Kunststoffmatrix hergestellt worden sind, mit einem an dem Rotorblatt entlangführbaren Wärmestrahler und einer dem Wärmestrahler nachgeführten Wärmebildkamera, die mit einer Auswerteeinrichtung gekoppelt ist. Der Laminataufbau kann auch ausschließlich aus Fasermatten oder Sandwichmaterialien ausgeführt sein. Ebenso kann der Laminataufbau aus Fasermatten mit stellenweisen Sandwichmaterialien ausgeführt sein. Sowohl das Verfahren als auch die Vorrichtung sind insbesondere für die Untersuchung von Rotorblättern großer Windenergieanlagen vorgesehen und geeignet.
Rotorblätter von Windenergieanlagen können eine Länge von über 75 m und eine Masse von mehr als 15 t aufweisen. Hergestellt werden die meisten Rotorblätter aus glas- oder kohlefaserverstärktem Kunststoff in der sogenannten Halbschalen-Sandwich-Technik, bei der Rotorblatt-Halbschalen zunächst separat hergestellt und anschließend mit Epoxidharzen oder Polyurethan miteinander verklebt werden. Bei der Herstellung der Rotorblatt-Halbschalen können unterschiedliche Verfahren eingesetzt werden, z.B. die Infusionstechnik, bei der Fasermatten in der Form bei Unterdruck mit Kunstharz getränkt werden. Bei einem anderen Verfahren werden Prepregs in Gestalt von mit Kunstharz benetzten Fasermatten verwendet, mit denen die Form ausgekleidet wird.

Schwerwiegende Schäden an den Halbschalen oder Rotorblättern können sowohl bei Handlaminaten als auch bei Vakuuminfusionsverfahren von Fasergelegen entstehen, wenn die nur auf Zug extrem belastbaren Fasern nicht in der optimalen Ebene parallel zueinander, sondern in Wellen oder Falten gelegt worden sind. Es entstehen dann sogenannte Wrinkles oder Ondulationen. Im Betrieb müssen dann die immensen Zugkräfte bei Spitzenumfangsgeschwindigkeiten von mehr als 200 km/h nicht von den Fasern, sondern von dem Kleber bzw. der Harzmatrix aufgenommen werden. Die Folgen einer solchen fehlerhaften Glasfaserlage, insbesondere in lasttragenden Gurtbereichen, sind Anrisse oder Durchrisse im massiven Fasergelege, aber auch in den Blattschalen, die unter Umständen zur kompletten Zerstörung einzelner Blätter führen können.

Da Fasergewebe, insbesondere Glasfasergewebe oder Karbonfasergewebe, durch die ihnen innewohnende Steifigkeit und die stets gegebene gerundete Oberflächenform des Rotorblattes beim Auslegen der Form immer nur eine näherungsweise Planarität besitzen können, sind Winkelabweichungen in der Orientierung der Gelege bzw. Gewebe nicht zu vermeiden. Wichtig ist dabei, wie sich betroffene Bereiche unzulässig hoher Winkelabweichungen ohne eine zerstörende Untersuchung erkennen lassen können.

Es gibt punktuell messende Vorrichtungen, die Ultraschallerreger oder eine Mikrowellentechnik verwenden. Die prinzipielle Möglichkeit, eine Ondulation mit einer Breite von 5 mm zu finden, ist durch solche punktuell messenden Methoden gegeben, allerdings führen die Punktmessverfahren bei Rotorblattoberflächen von mehr als 200 m² zu einer extrem zeitaufwendigen Prüfung.

Eine alternative Vorrichtung und ein alternatives Verfahren zur Inspektion von Rotorblättern einer Windkraftanlage ist in der DE 10 2010 046 493 B3 beschrieben, bei dem das zu prüfende Rotorblatt mittels einer Anregungsquelle in Gestalt eines Umlenk- und Fokussiersystems erwärmt wird. Sonnenstrahlen werden von einem Umlenkspiegel fokussiert und auf das Rotorblatt geleitet. Der Spiegel ist an einem fliegenden Träger angeordnet, der in einem kontrollierten Abstand an dem Rotorblatt entlangfliegt. Ein Infrarotsensor kann fest auf dem Boden stationiert oder zusammen mit der Anregungsquelle an dem fliegenden Träger befestigt sein. Der fliegende Träger arbeitet sich mit gleichbleibender Geschwindigkeit an dem zu prüfenden Rotorblatt entlang. Diese Technik setzt das Vorhandensein von Sonnenschein voraus, was nicht immer gegeben ist. Scheint die Sonne, erschwert sie die Erkennung der von dem Rotorblatt abgegebenen IR-Strahlung durch die Wärmebildkamera.

Aus diesen thermografischen Messungen lässt sich der Ort der Fehlstelle oder Ondulation kosteneffizient bestimmen, ggf. können auch bereits vorhandene Folgeschäden aufgefunden werden. Durch die flächige Prüfung erreicht man eine signifikante Verringerung der Prüfdauer im Vergleich zu punktuell messenden Vorrichtungen oder Verfahren. Zerstörende Prüfungen der Rotorblätter müssen nicht durchgeführt werden, vielmehr kann durch die zerstörungsfreie Materialprüfung eine große Anzahl von Rotorblättern auch im Einsatz, also im montierten Zustand überprüft werden, wodurch kapitale Blattverluste verhindert werden können.

Nachteilig an dem bekannten Verfahren und der bekannten Vorrichtung ist, dass hohe Ungenauigkeiten bei der Erwärmung ebenso wie der Erfassung des Wärmebildes entstehen, da ein Fluggerät mit einem Umlenkspiegel keine Gewähr für eine gleichmäßige Erwärmung und einen gleichmäßigen Messabstand bietet.

Der Artikel von K. Dickmann "Laser ablation- and LIBS-ranging by webcam and image prosessing during laser cleaning" betrifft eine Vorrichtung und ein Verfahren zum Reinigen verschiedener Kunstwerke, beispielsweise Bilder oder Steinoberflächen, bei dem mit einem Laser entsprechende Energieimpulse auf die Oberfläche aufgebracht werden. Da die Verschmutzungslagen nicht gleichförmig ausgebildet sind, ist es notwendig, die Anzahl der Laserimpulse an einer bestimmten Stelle an den Grad der Verschmutzung anzupassen, um eine geeignete Reinigungswirkung an dem Objekt zu erzielen. Während der Reinigung mit dem Laser werden die Koordinaten eines jeden Laserimpulses, der auf das zu reinigende Objekt aufgebracht wird, über eine Kamera erfasst, die sich oberhalb des Objektes befindet. An der Kamera ist eine Bildverarbeitungseinrichtung angeschlossen. Dieses Verfahren wurde angewendet, um die korrespondierenden Koordinaten der Laser Induced Breakdown Spectroscopy während der Laserreinigung zu erhalten. Dabei wird mit einem energiereichen Laserpuls eine kleine Menge des Materials verdampft und ein Plasma erzeugt. Durch eine spektroskopische Analyse der Plasmastrahlung kann der Elementengehalt bestimmt werden. Ein handführbares Laserelement, das an einem Gelenkarm befestigt ist, wurde mit einem Distanzhalter oder Abstandshalter ausgestattet, um eine konstante Energiedichte auf der Objektoberfläche zu gewährleisten, da der Austrittsstrahl nicht parallel, sondern konvergierend ausgebildet ist.

Die DE 10 2007 059 502 B3 betrifft eine Vorrichtung und ein Verfahren zum Prüfen eines Rotorblattes einer Windkraftanlage, bei dem ein Ziellichtstrahl auf eine Rotorblattoberfläche gerichtet wird. Eine Reflexion des Ziellichtstrahles wird erfasst. Unmittelbar nach dem Erfassen der Reflexion wird ein Messlaserstrahl auf die Auftreffstelle des Ziellichtstrahles gesendet, um die Auftreffstelle zu erwärmen. Anschließend wird die Temperaturverteilung an der Auftreffstelle vermessen.

Die EP 2 752 621 A2 betrifft eine Vorrichtung zur Wartung von Rotorblättern einer Windturbine mit einem Körper, der ausgestaltet ist, sich entlang einer vorderen Kante eines Rotorblattes zu bewegen. Stützeinheiten erstrecken sich zu beiden Seiten des Rotorblattes von dem Körper weg und sind ausgebildet, sich auf den Seiten des Rotorblattes abzustützen. Eine Wartungseinheit ist entweder an dem Körper oder den Stützeinheiten befestigt, um eine Wartung einer äußeren Seite des Rotorblattes durchzuführen, wobei die Wartungseinheit Reinigungsroboterarme aufweist, die an beiden Seiten des Körpers installiert sind. Eine Reinigungsbürste ist an jeweils einem distalen Ende eines Roboterarmes angeordnet. Stützroboterarme sind an den Stützeinheiten installiert und weisen eine Rolle zum Kontaktieren der äußeren Seite des Rotorblattes auf, wobei die Rolle an einem distalen Ende des Stützroboterarms angeordnet ist, um eine Rollbewegung durchzuführen. Die Reinigungsroboterarme sind von den Stützroboterarmen getrennt.

Aufgabe der vorliegenden Erfindung ist es, eine Vorrichtung und ein Verfahren zur Detektion von Fehlstellen in Rotorblättern bereitzustellen, die gegenüber dem bekannten Verfahren und der bekannten Vorrichtung eine höhere Genauigkeit aufweisen, um präziser den Ort der Fehlstelle, der Ondulation und auch das Ausmaß der Fehlstelle bestimmen zu können.

Erfindungsgemäß wird diese Aufgabe durch ein Verfahren mit den Merkmalen des Hauptanspruches und eine Vorrichtung mit den Merkmalen des nebengeordneten Anspruchs gelöst. Vorteilhafte Ausgestaltungen und Weiterbildungen der Erfindung sind in den Unteransprüchen, der Beschreibung sowie den Figuren offenbart.

Das erfindungsgemäße Verfahren zur Detektion von Fehlstellen in Rotorblättern, die in Laminatbauweise mit einem Lagenaufbau mit oder aus Fasermatten und/oder Sandwichmaterialien in einer Kunststoffmatrix hergestellt worden sind, wobei das Rotorblatt mit einem an dem Rotorblatt entlanggeführten Wärmestrahler lokal erwärmt wird, die erwärmte Stelle mit einer an dem Rotorblatt entlanggeführten Wärmebildkamera erfasst und Ungleichmäßigkeiten in dem Wärmebild mit Methoden der Bildverarbeitung oder Signalanalyse ausgegeben werden, sieht vor, dass der Wärmestrahler und die Wärmebildkamera an zumindest einem verlagerbar an einer Arbeitsplattform gelagerten Halter angeordnet sind, der während der Erwärmung und Erfassung durch die Wärmebildkamera gegen das Rotorblatt gedrückt wird. Der Halter, an dem die Wärmebildkamera bzw. die Wärmequelle oder der Wärmestrahler angeordnet sind, wird auf der Oberfläche des Rotorblattes entlanggeführt, wobei der Halter gegen die Rotorblattoberfläche gedrückt wird, so dass stets ein Kontakt zwischen dem Halter und dem Rotorblatt besteht, so dass aufgrund der festen geometrischen Zuordnung von dem Halter zu dem Wärmestrahler und der Wärmebildkamera stets ein konstanter Abstand eingehalten werden kann. Dadurch ist es möglich, die jeweils zu untersuchende Oberfläche des Rotorblattes mit einer definierten, gleichbleibenden und reproduzierbaren Wärmemenge zu bestrahlen und ebenso in einem definierten Abstand die Wärmebildkamera über den bestrahlten Bereich zu führen, um eine präzise, ortsaufgelöste Darstellung der abgegebenen Wärmestrahlung und der Inhomogenitäten in der Wärmeabstrahlung des untersuchten Rotorblattes festzustellen. Anhand der Inhomogenitäten der erfassten Wärmestrahlung kann auf Inhomogenitäten in der Struktur der Rotorblätter geschlossen werden. Darüber hinaus ist es möglich, beispielsweise unter Nutzung einer an dem Rotorblatt entlanggeführten Arbeitsbühne, die Oberfläche des Rotorblattes an der Fundstelle sofort aufzuschleifen, optisch zu inspizieren und ggf. unmittelbar zu reparieren.
Der zumindest eine Halter wird pneumatisch, hydraulisch oder über einen mechanischen Kraftspeicher oder auch über die Gewichtskraft mit einer Vorspanneinrichtung gegen das Rotorblatt gedrückt. Durch die definierte Kraftaufbringung wird gewährleistet, dass stets der Kontakt zwischen dem Halter und dem Rotorblatt besteht.

Die Verfahrgeschwindigkeit der Arbeitsplattform und/oder der Abstand des Wärmestrahlers zu der Wärmebildkamera wird in Abhängigkeit von der erforderlichen Tiefenreichweite der Detektion verändert.
An dem Halter ist eine Kontaktfläche oder eine Kontaktrolle angeordnet, die auf der Oberfläche des Rotorblattes entlanggeführt wird. Die Kontaktfläche kann mit einer reibungsreduzierten Beschichtung versehen sein, so dass die Oberfläche des Rotorblattes nicht beschädigt wird. Eine Ausgestaltung als Kontaktrolle verringert den Reibungswiderstand und die Möglichkeit, durch die Prüfung des Rotorblattes die Oberfläche zu beschädigen.

Der Wärmestrahler und die Wärmebildkamera werden bevorzugt in einen konstanten Abstand zu der Rotorblattoberfläche verfahren, um auszuschließen, dass durch Abstandsschwankungen Messungenauigkeiten auftreten.

Der zumindest eine Halter kann auf einer festgelegten Bahn entlang des Rotorblattes oder der Rotorblattlenkachse geführt werden, was insbesondere bei einer Überprüfung während und nach der Produktion im nicht eingebauten Zustand geeignet ist. Die Messvorrichtung mit dem Wärmestrahler kann beispielsweise auf einer Schienenführung entlang dem Rotorblatt mit einer gleichmäßigen, vorbestimmten Geschwindigkeit verfahren werden, wobei Distanzschwankungen aufgrund der Krümmung des Rotorblattes oder Ausrichtfehler durch die Anpresskraft, die die Halter gegen das Rotorblatt drückt, ausgeglichen werden. Hierzu ist der Halter verlagerbar an der Arbeitsplattform oder dergleichen angeordnet, wobei durch die Längenveränderung des Halters keine Veränderung des Abstandes von dem Wärmestrahler und der Wärmebildkamera zu dem Rotorblatt eintritt, wenn oder weil diese Komponenten an dem vorderen Teil des Halters in einem festen Abstand zu dem vorderen Ende des Halters befestigt sind.

Um Ungenauigkeiten weiter zu reduzieren, wird die Wärmebildkamera in einem konstanten Abstand dem Wärmestrahler nachgeführt, so dass bei einer konstanten Verfahrgeschwindigkeit des Wärmestrahlers entlang des Rotorblattes zwischen der Bestrahlung und der Aufnahme stets der gleiche Zeitraum liegt, so dass ein reproduzierbares Ergebnis bereitgestellt werden kann.

Vorteilhafterweise wird die Orientierung der Wärmebildkamera ebenso wie des Wärmestrahlers der Oberflächenkontur des Rotorblattes angepasst. Dazu werden die Wärmebildkamera und der Wärmestrahler stets senkrecht oder in einem gleichbleibenden Winkel zu der Oberfläche des Rotorblattes orientiert gehalten, so dass der Änderung der Form des Rotorblattes auch in Querrichtung Rechnung getragen wird. Die Wärmebildkamera und der Wärmestrahler können nachgeführt werden, was eine entsprechende gelenkige Lagerung an dem Halter oder einer Halterung erforderlich macht.
Eine Weiterbildung des Verfahrens sieht vor, dass die Position der Wärmebildkamera und/oder des Wärmestrahlers auf dem Rotorblatt erfasst und den Wärmebilddaten zugeordnet wird. Die Position der Wärmebildkamera, des Wärmestrahlers oder beider Komponenten auf dem Rotorblatt wird vorteilhafterweise von einer Bezugsstelle ausgemessen, beispielsweise von dem Ausgangspunkt der Messung, beispielsweise am Befestigungspunkt des Rotorblattes an der Nabe. Der von dort aus zurückgelegte Weg wird den jeweiligen Bildern, die von der Wärmebildkamera aufgenommen werden, zugeordnet, beispielsweise eingebrannt oder parallel dazu gespeichert, so dass eine einfache Wiederauffindbarkeit der jeweils untersuchten Stelle anhand der ausgewerteten Wärmebilddaten leicht möglich ist. Wird eine bestimmte Stelle als fehlerhaft detektiert, kann beispielsweise im Rahmen einer Wartung diese Stelle einfach wiedergefunden werden, so dass die Detektion der Fehlstellen und deren Behebung zeitlich auseinanderfallen kann.
Die Bilder mit erkannten Fehlern werden vorteilhafterweise in einer Fehlerdatei gesondert abgespeichert, bevorzugt mit dem Positionsdaten, so dass nicht die gesamte thermografische Auswertung des Rotorblattes zur Behebung von Fehlstellen ausgewertet werden muss.
Die Vorrichtung zur Detektion von Fehlstellen in Rotorblättern, die in Laminatbauweise mit einem Lagenaufbau aus Fasermatten in einer Kunststoffmatrix hergestellt worden sind, mit einem an dem Rotorblatt entlangführbaren Wärmestrahler und einer dem Wärmestrahler nachgeführten Wärmebildkamera, die mit einer Auswerteeinrichtung gekoppelt ist, sieht vor, dass der Wärmestrahler und die Wärmebildkamera an zumindest einem verlagerbar an einer Arbeitsplattform gelagerten Halter angeordnet sind, dem eine Vorspanneinrichtung zum Andrücken des Halters gegen das Rotorblatt zugeordnet ist. Durch die Vorspanneinrichtung wird der Halter gegen das Rotorblatt gedrückt und beim Entlangführen über die Oberfläche des Rotorblattes, insbesondere entlang der Längserstreckung des Rotorblattes, an dem Rotorblatt gehalten, so dass Änderungen der Form des Rotorblattes in Querrichtung gefolgt werden kann. Die Wärmebildkamera kann relativ zu dem Wärmestrahler verlagerbar gelagert sein, insbesondere an einer Arbeitsplattform, so dass einerseits der Abstand in Verlagerungsrichtung des Wärmestrahlers bzw. der Wärmebildkamera ebenso gegeben ist, wie die Veränderung des Abstandes von der Wärmebildkamera zu dem Rotorblatt und des Wärmestrahlers zu dem Rotorblatt. Je größer der Abstand der Wärmebildkamera zu dem Wärmestrahler in der Verlagerungsrichtung ist, desto größer ist der zeitliche Abstand, mit der die Wärmebildkamera das entsprechende Bild aufnimmt, wobei dadurch auch Fehler in vergleichsweise großen Tiefen der Rotorblattstruktur erkannt werden können. Eine langsame Verfahrgeschwindigkeit oder ein großer Abstand zwischen dem Wärmestrahler und der Wärmebildkamera vergrößern die Tiefenreichweite der Technik und des Verfahrens. Je größer die Entfernung der Wärmebildkamera zu der Oberfläche des Rotorblattes ist, desto geringer ist die Wärmemenge, die von der Kamera aufgenommen werden kann, so dass eine Anpassung auch an die Empfindlichkeit der Wärmebildkamera durch die Verstellbarkeit der Abstände möglich ist.

Die Erfindung sieht vor, dass der zumindest eine Halter an einer Arbeitsplattform verlagerbar gelagert ist, so dass der Abstand von dem Wärmestrahler oder der Wärmebildkamera zu dem Rotorblatt oder untereinander einstellbar ist. Darüber hinaus kann über einen Halter, der beispielsweise teleskopierbar ist, einerseits die Führung des Halters an der Arbeitsplattform sichergestellt und andererseits die Arbeitsplattform auf einer Bahn relativ zu dem Rotorblatt verfahren werden, die nicht parallel oder äquidistant zur Rotorblattkontur verläuft. Darüber hinaus ist die Einstellbarkeit des Abstandes der Wärmebildkamera und des Wärmestrahlers durch eine Verstellbarkeit des Halters relativ zu der Oberfläche des Rotorblattes möglich.

Um die Orientierung sowohl der Wärmebildkamera als auch des Wärmestrahlers gleichmäßig relativ zu der Oberfläche des Rotorblattes ausrichten zu können, ist der Wärmestrahler und/oder die Wärmebildkamera vorteilhafterweise verlagerbar an dem zumindest einen Halter gelagert, so dass beispielsweise stets eine orthogonale Ausrichtung der Wärmebildkamera und des Wärmestrahlers zu der Rotorblattoberfläche gewährleistet sein kann. Die verlagerbare Lagerung kann beispielsweise über ein Kugelgelenk, ein Kardangelenk oder ein anderes mehrachsiges Gelenk erfolgen, das eine Verlagerung in mehreren Freiheitsgraden zulässt.

Der zumindest eine Halter kann entlang einer festgelegten Bahn verlagerbar gelagert sein, beispielsweise entlang einer Schiene, die neben und vorteilhafterweise parallel zur Längserstreckung des Rotorblattes, das untersucht werden soll, orientiert ist. Beispielsweise kann die Arbeitsplattform auf einem Schlitten gelagert sein, so dass sowohl die Wärmebildkamera als auch der Wärmestrahler mit einer konstanten oder nahezu konstanten Geschwindigkeit entlang des Rotorblattes verfahren werden kann. Die Arbeitsplattform kann an zwei Seilen befestigt sein, die entweder über die beiden nicht zu untersuchenden Rotorblätter gezogen werden und an oder in dem Getriebegehäuse befestigt sind. Ein Motor oder mehrere Motoren, die synchron betrieben werden und beispielsweise oberhalb der Arbeitsplattform angebracht sind, ziehen die Arbeitsplattform hoch oder lassen sie herab. Die Verfahrgeschwindigkeit der Arbeitsplattform ist einstellbar, so dass über die Geschwindigkeit Einfluss auf die Tiefenreichweite der Untersuchung genommen werden kann.

Neben einer verschwenkbaren Lagerung der Wärmebildkamera und/oder des Wärmestrahlers an dem Halter können diese auch verschieblich an dem Halter angeordnet sein, um eine Einstellbarkeit der Abstände zueinander und der Rotorblattoberfläche zu gewährleisten.

Der Vorrichtung kann eine Messeinrichtung zugeordnet sein, mit der es möglich ist, die Position der Wärmebildkamera auf dem Rotorblatt zu erfassen. Die Messeinrichtung kann als GPS-basierte Sensoreinrichtung, als Zählrad oder als Auswerteeinrichtung einer gemessenen Verfahrgeschwindigkeit der Wärmebildkamera ausgebildet sein. Über die Messeinrichtung ist es möglich, die Position der Wärmebildkamera auf dem Rotorblatt zu bestimmen und diese Ortsdaten den jeweiligen erfassten Wärmebildern zuzuordnen. Dabei kann die Messeinrichtung mittels externer Bezugsdaten über ein satellitengesteuertes Ortungssystem arbeiten, so dass unabhängig von der zurückgelegten Fahrstrecke eine Position der Messeinrichtung und damit auch der Wärmebildkamera zugeordnet werden kann. Voraussetzung hierfür ist es, die Position des Rotorblattes ebenfalls zu bestimmen oder zumindest eine definierte Orientierung des Rotorblattes bei der Messung festzulegen, beispielsweise in einer senkrecht nach unten orientierten Stellung. Eine mechanische Messeinrichtung kann ein Zählrad oder eine vergleichbare Wegmesseinrichtung darstellen, die von Beginn der Messung, beispielsweise an der Nabe beginnend, der Wärmebildkamera vor- oder nachgeführt wird, so dass die Position von einer Ausgangsposition her bestimmt werden kann. Alternativ zu einem Zählrad kann auch eine optische Messeinrichtung, beispielsweise ein Lasermesssystem eingerichtet werden. Auch ist es möglich, anhand der Daten der Motorsteuerung, die zum Verfahren der Messeinrichtung oder der Wärmebildkamera entlang des Rotorblattes eingesetzt wird, über die Verfahrgeschwindigkeit und die Verfahrdauer die Verfahrstrecke abzuleiten oder anhand der Drehzahl und der Übersetzungen zu errechnen, an welcher Position des Rotorblattes die jeweilige Messung zu einem bestimmten Zeitpunkt stattgefunden hat und diese Positionsdaten dem Bild zuzuordnen.

Nachfolgend wird ein Ausführungsbeispiel der Erfindung anhand der beigefügten Figuren näher erläutert. Es zeigen:
- Figur 1 -: ein Rotorblatt in einer Gesamtansicht;
- Figur 2 -: eine vergrößerte Schnittdarstellung eines Gurtlaminats;
- Figur 3 -: eine schematische Darstellung einer Untersuchung; sowie
- Figur 4 -: eine schematische Einzeldarstellung einer Vorrichtung.

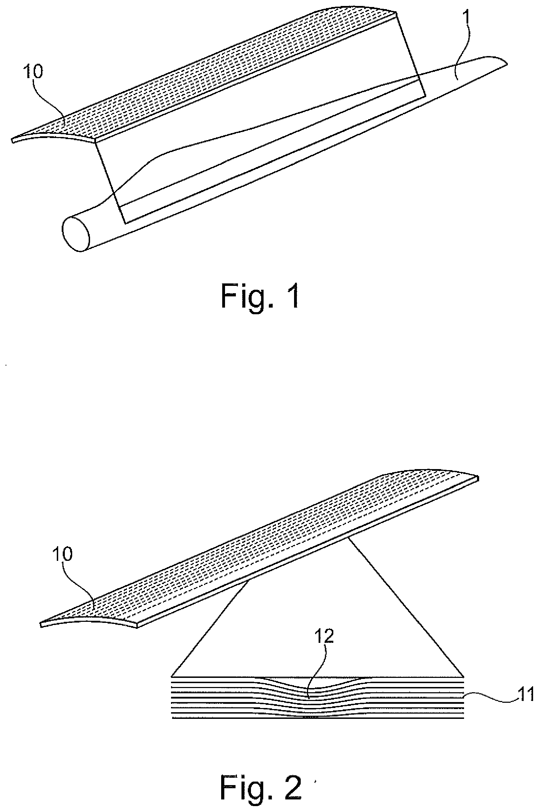

In der Figur 1 ist in einer schematischen Darstellung einer Rotorblatt 1 einer Windenergieanlage mit einem Gurt 10 gezeigt, der als tragende Struktur des Rotorblattes 1 dient. Das Rotorblatt 1 weist eine gewölbte Oberfläche auf, um eine tragflügelartige Struktur zu erhalten. Das Rotorblatt 1 und insbesondere der Gurt 10 sind aus einem Laminat aus Fasermatten, beispielsweise Glasfasermatten oder Kohlefasermatten hergestellt, die in einer Kunststoffmatrix, beispielsweise einem Epoxidharz oder dergleichen, eingebettet sind. Das Fasergewebe wird zur Formgebung beispielsweise in eine Schablone gelegt und unter Anlegen von Unterdruck mit Harz durchtränkt. Die Fasern selbst sind darauf ausgelegt, sehr hohe Zugkräfte aufzunehmen, die Kunststoff- oder Harzmatrix dient zur Zuordnung der Faserorientierungen zueinander, zur Fixierung der Gelege sowie deren Schutz vor mechanischen und chemischen Einwirkungen.

Figur 2 zeigt den ausgeschnittenen Gurt 10 als Gurtlaminat und tragende Struktur mit einer Wellengestalt oder Ondulation 12 in dem Bereich, in dem die Gewebe oder Fasermatten nicht überall gleichmäßig linear, sondern nur bereichsweise in einem Winkel versetzt zueinander, in einer Welle oder in einer Falte verlegt sind. Der dabei entstandene Hohlraum zwischen den Faserlagen oder an der Oberfläche ist mit dem Harz aufgefüllt, so dass sich unterschiedliche innere Strukturen im Bereich der fehlerhaften Verlegung der Fasermatten ergeben. Es kommt vor, dass sich im Bereich der Auffüllungen Luftblasen anlagern, die ebenfalls sehr gut über eine Wärmebildkamera detektierbar sind. Aufgrund der unterschiedlichen Wärmeleitfähigkeit des Harzes relativ zu einem Gemisch aus Harz und Fasergewebe kann es bei einer thermografischen Untersuchung zu unterschiedlichen Thermografiebildern kommen, wenn eine gleichmäßige Erwärmung des Rotorblattes 1 oder eines Bereiches des Rotorblattes 1, beispielsweise des Gurtes 10 erfolgt. Da die Wärme, die durch einen Wärmestrahler eingebracht wurde, durch das Harz oder die Lufteinlagerungen nicht so gut abgeleitet werden kann, ergibt sich ein helleres Bild im Bereich der Fehlstellen, während bei einer korrekten oder gleichmäßigen Verlegung der Gewebelagen ein gleichmäßiges, relativ dunkles Bild erfasst werden kann.

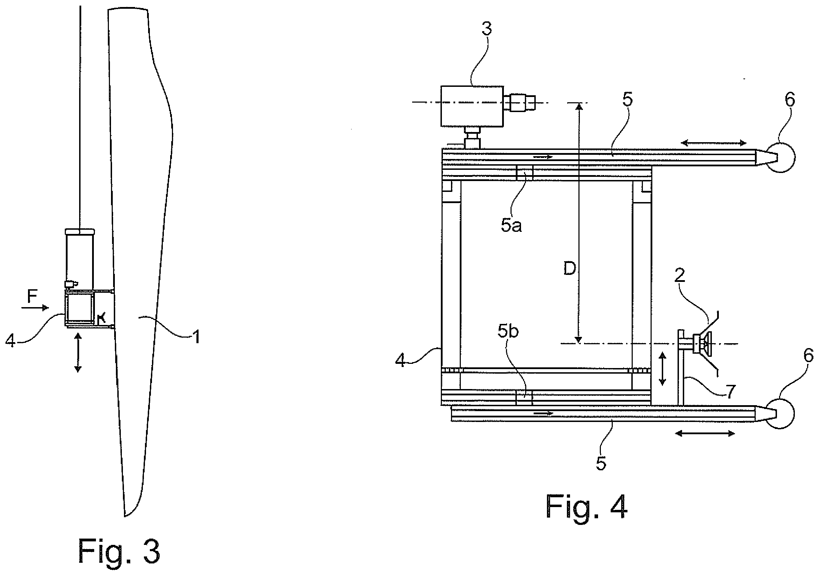

Figur 3 zeigt eine schematische Darstellung des Rotorblattes 1 und der Arbeitsplattform 4, die an dem Rotorblatt 1 befestigt ist. Die Arbeitsplattform 4 ist in der Figur 4 in einer vergrößerten Detaildarstellung gezeigt. Zur Durchführung des Prüfverfahrens wird an der Arbeitsplattform 4 ein Wärmestrahler 2 und eine Wärmebildkamera 3 angebracht. Der Wärmestrahler 2 wird über eine externe Energiequelle versorgt, insbesondere mit Strom versorgt, so dass der Wärmestrahler die elektrische Energie in Wärmeenergie umwandelt Die Optik der Wärmebildkamera 3 wird so eingestellt, dass die von dem Wärmestrahler 2 erwärmten und zu untersuchenden Bereiche, beispielsweise der Bereich des Gurtes 10, scharf abgebildet werden kann. Die Wärmebildkamera 3 ist ebenso wie der Wärmestrahler 2 an jeweils einem Halter 5 angebracht, an dessen vorderem Ende jeweils eine Kontaktrolle 6 befestigt ist, die auf der Oberfläche des Rotorblattes 1 abrollt.

In der Darstellung der Figur 3 befindet sich die Arbeitsplattform 4 an einem Seil, das beispielsweise an der Nabe eines Rotors des Rotorblattes befestigt ist. Über das Seil kann das senkrecht nach unten stehende Rotorblatt 1 im montierten Zustand überprüft werden. Die Arbeitsplattform 4 wird an dem Rotorblatt 1 herunterfahrend abgelassen, wobei eine Kraft F in Richtung auf das Rotorblatt 1 ausgeübt wird, beispielsweise über einen pneumatischen oder mechanischen Andruck. Die Kontaktrollen 6, die in einem festgelegten, konstanten Abstand sowohl von dem Wärmestrahler 2 als auch der Wärmebildkamera 3 angebracht sind, um die Erwärmung und das Bildfeld nicht zu stören, rollen ständig auf dem Rotorblatt 1 ab. Zwischen dem Wärmestrahler 2 und der Wärmebildkamera 3 ist ein fester Abstand D eingestellt, der über die verschiebliche Lagerung des Wärmestrahlers 2 an einem Ausleger 7 des Halters 5 veränderbar ist. Ebenso sind die Positionen des Wärmestrahlers 2 und der Wärmebildkamera 3 entlang der Längserstreckung der Halter 5 veränderbar, was durch die Doppelpfeile angedeutet ist.

Während die Arbeitsplattform 4 mit einer vordefinierten, einstellbaren, konstanten Geschwindigkeit entlang dem Rotorblatt 1 entlanggefahren wird, werden Infrarotbilder oder Videos von der Wärmeverteilung der Oberfläche des Rotorblattes 1 durch die Wärmebildkamera 3 aufgenommen und an eine nicht dargestellte Auswerteeinrichtung übermittelt. Der Wärmestrahler 2 kann als linienförmiger Strahle oder Flächenstrahler ausgebildet sein und ist in Verfahrrichtung bei der Untersuchung auf Fehlstellen vor der Wärmebildkamera 3 angeordnet. Aufgrund der sich verändernden Abstrahlung bei sich verändernden Dichten aufgrund von Delaminationen, Winkelverwerfungen, Falten oder dergleichen, können Wärmeunterschiede durch die Wärmebildkamera 3 detektiert werden, so dass Lufteinschlüsse und Harzansammlungen als wärmere Stellen mit der Wärmebildkamera 3 detektiert werden können.

Für die optische Kontrolle und eine möglicherweise notwendigere Reparatur einzelner Teilbereiche an Rotorblättern 1 einer Windenergieanlage werden die Arbeitsplattformen 4 eingesetzt, die auch das gesamte Rotorblatt 1 umfassen können und durch das Rotorblatt 1 geführt werden. Der Wärmestrahler 2 ist im dargestellten Ausführungsbeispiel an der Unterseite der Arbeitsplattform 4 angebracht, so dass die Oberfläche des Rotorblattes 1 linienförmig und im Wesentlichen orthogonal zur Blattlängsachse erwärmt werden kann. Dadurch wird bei einer gleichmäßigen Verfahrgeschwindigkeit in Prüfrichtung durch den Wärmestrahler 2 die Oberfläche homogen erwärmt. Dies wird dadurch erreicht, dass der Wärmestrahler 2 immer die gleiche Entfernung zu dem Rotorblatt 1 innehat. Für die Nachführung der Wärmebildkamera 3 und des Wärmestrahlers 2 bei einer Änderung der Form des Rotorblattes in Querrichtung entlang seiner Längserstreckung ist sowohl der Wärmestrahler 2 als auch die Wärmebildkamera 3 verschwenkbar, beispielsweise kardanisch aufgehängt, so dass stets eine gleichbleibende, in der Regel orthogonale Ausrichtung sowohl des Wärmestrahlers 2 als auch der Wärmebildkamera 3 relativ zu der Oberfläche des Rotorblattes 1 gewährleistet ist.

In der Figur 4 sind ebenfalls die Vorspanneinrichtungen 5a, 5b gezeigt, die eine Kraft in Pfeilrichtung auf die jeweiligen Halter ausüben, so dass diese gegen das Rotorblatt 1 gedrückt werden. Die Vorspanneinrichtungen 5a, 5b können Federeinrichtungen, Motore, Druckspeicher oder ähnliche Einrichtungen sein, die die jeweiligen Komponenten der Vorrichtung gegen das Rotorblatt 1 vorspannen. Die Arbeitsplattform 4 kann auf der jeweils rückwärtigen Seite des Rotorblattes ein Wiederlager haben, beispielsweise in Gestalt einer Rolle, die an einem Gestänge geführt ist, so dass sich die Halter zusätzlich gegen das Rotorblatt 1 abstützen können.

## Patentansprüche

1. Verfahren zur Detektion von Fehlstellen in Rotorblättern (1), die in Laminatbauweise mit einem Lagenaufbau mit Fasermatten und/oder Sandwichmaterialien in einer Kunststoffmatrix hergestellt worden sind, wobei das Rotorblatt (1) mit einem an dem Rotorblatt (1) entlanggeführten Wärmestrahler (2) lokal erwärmt wird, die erwärmte Stelle mit einer an dem Rotorblatt (1) entlanggeführten Wärmebildkamera (3) erfasst und Ungleichmäßigkeiten in dem Wärmebild mit Methoden der Bildverarbeitung oder Signalanalyse ausgegeben werden, **dadurch gekennzeichnet, dass** der Wärmestrahler (2) und die Wärmebildkamera (3) an zumindest einem verlagerbar an einer Arbeitsplattform (4) gelagerten Halter (5) angeordnet sind, der während der Erwärmung und Erfassung pneumatisch, hydraulisch oder über einen mechanischen Kraftspeicher mit einer Vorspanneinrichtung (5a, 5b) gegen das Rotorblatt (1) gedrückt wird und die Verfahrgeschwindigkeit der Arbeitsplattform (4) und/oder der Abstand (D) des Wärmestrahlers (2) zu der Wärmebildkamera (3) in Abhängigkeit von der erforderlichen Tiefenreichweite der Detektion verändert wird.

2. Verfahren nach Anspruch 1, **dadurch gekennzeichnet, dass** an dem zumindest einen Halter (5) eine Kontaktfläche oder eine Kontaktrolle (6) angeordnet ist, die auf der Oberfläche des Rotorblattes (1) entlanggeführt wird.

3. Verfahren nach einem der voranstehenden Ansprüche, **dadurch gekennzeichnet, dass** der Wärmestrahler (2) und die Wärmebildkamera (3) in einem konstanten Abstand zu der Rotorblattoberfläche verfahren werden.

4. Verfahren nach einem der voranstehenden Ansprüche, **dadurch gekennzeichnet, dass** der zumindest eine Halter (5) auf einer festgelegten Bahn entlang des Rotorblattes (1) oder der Rotorblattlängsachse geführt wird.

5. Verfahren nach einem der voranstehenden Ansprüche, **dadurch gekennzeichnet, dass** die Wärmebildkamera (3) in einem konstanten Abstand (D) dem Wärmestrahler (2) nachgeführt wird.

6. Verfahren nach einem der voranstehenden Ansprüche, **dadurch gekennzeichnet, dass** Bilder mit erkannten Fehlern in einer Fehlerdatei gesondert abgespeichert werden.

7. Verfahren nach einem der voranstehenden Ansprüche, **dadurch gekennzeichnet, dass** die Position der Wärmebildkamera (3) und/oder des Wärmestrahlers (2) auf dem Rotorblatt (1) erfasst und den Wärmebilddaten zugeordnet wird.

8. Vorrichtung zur Detektion von Fehlstellen in Rotorblättern (1), die in Laminatbauweise mit einem Lagenaufbau aus Fasermatten und/oder Sandwichmaterialien in einer Kunststoffmatrix hergestellt worden sind, mit einem an dem Rotorblatt (1) entlangführbaren Wärmestrahler (2) und einer dem Wärmestrahler (2) nachgeführten Wärmebildkamera (3), die mit einer Auswerteeinrichtung gekoppelt ist, **dadurch gekennzeichnet, dass** der Wärmestrahler (2) und die Wärmebildkamera (3) an zumindest einem an einer Arbeitsplattform (4) verlagerbar gelagerten Halter (5) angeordnet sind, dem eine Vorspanneinrichtung (5a, 5b) zum Andrücken des Halters (5) gegen das Rotorblatt (1) zugeordnet und die Wärmebildkamera (3) relativ zu dem Wärmestrahler (2) verlagerbar gelagert ist.

9. Vorrichtung nach Anspruch 8, **dadurch gekennzeichnet, dass** der Wärmestrahler (2) und/oder die Wärmebildkamera (3) verlagerbar an dem zumindest einen Halter (5) gelagert sind.

10. Vorrichtung nach einem der Ansprüche 8 oder 9, **dadurch gekennzeichnet, dass** der zumindest eine Halter (5) entlang einer festgelegten Bahn verlagerbar gelagert ist.

11. Vorrichtung nach einem der Ansprüche 8 bis 10, **dadurch gekennzeichnet, dass** die Wärmebildkamera (3) und/oder der Wärmestrahler (2) verschwenkbar an dem zumindest einen Halter (5) gelagert sind.

12. Vorrichtung nach einem der Ansprüche 8 bis 11, **gekennzeichnet durch** eine Messeinrichtung, die die Position der Wärmebildkamera (3) auf dem Rotorblatt (1) erfasst.

13. Vorrichtung nach Anspruch 12, **dadurch gekennzeichnet, dass** die Messeinrichtung als GPS-basierte Sensoreinrichtung, als Zählrad oder als Auswerteeinrichtung einer gemessenen Verfahrgeschwindigkeit der Wärmebildkamera (3) ausgebildet ist.

## Claims

1. Method for detecting defects in rotor blades (1) that have been manufactured so as to have a laminate structure that comprises a layer construction consisting of fibre mats and/or sandwich materials in a plastics matrix, the rotor blade (1) being locally heated by means of a heat radiator (2) which is guided along the rotor blade (1), the heated location being captured by a thermal-imaging camera (3) which is guided along the rotor blade (1), and irregularities in the thermal image being output by means of methods of image processing or signal analysis, **characterised in that** the heat radiator (2) and the thermal-imaging camera (3) are arranged on at least one holder (5) that is movably mounted on a working platform (4) and is pressed, pneumatically, hydraulically or by means of a mechanical energy accumulator having a preloading means (5a, 5b), against the rotor blade (1) during the heating, and the traverse rate of the working platform (4) and/or the distance (D) between the heat radiator (2) and the thermal-imaging camera (3) is modified depending on the required depth range for the detection.

2. Method according to claim 1, **characterised in that** a contact face or a contact roller (6) is arranged on the at least one holder (5) and is guided along the surface of the rotor blade (1).

3. Method according to either of the preceding claims, **characterised in that** the heat radiator (2) and the thermal-imaging camera (3) are moved at a constant distance from the rotor blade surface.

4. Method according to any of the preceding claims, **characterised in that** the at least one holder (5) is guided on a fixed path along the rotor blade (1) or the rotor-blade longitudinal axis.

5. Method according to any of the preceding claims, **characterised in that** the thermal-imaging camera (3) tracks the heat radiator (2) at a constant distance (D).

6. Method according to any of the preceding claims, **characterised in that** images containing identified defects are stored separately in a defect file.

7. Method according to any of the preceding claims, **characterised in that** the position of the thermal-imaging camera (3) and/or the heat radiator (2) on the rotor blade (1) is captured and is assigned to the thermal image data.

8. Device for detecting defects in rotor blades (1) that have been manufactured so as to have a laminate structure comprising a layer construction consisting of fibre mats and/or sandwich materials in a plastics matrix, said device comprising a heat radiator (2) which can be guided along the rotor blade (1) and a thermal-imaging camera (3) which tracks the heat radiator (2) and is coupled to an evaluation means, **characterised in that** the heat radiator (2) and the thermal-imaging camera (3) are arranged on at least one holder (5) which is movably mounted on a working platform (4), and with which a preloading means (5a, 5b) is associated for pressing the holder (5) against the rotor blade (1) and the thermal-imaging camera (3) is mounted so as to be movable relative to the heat radiator (2).

9. Device according to claim 8, **characterised in that** the heat radiator (2) and/or the thermal-imaging camera (3) are movably mounted on the at least one holder (5).

10. Device according to either claim 8 or claim 9, **characterised in that** the at least one holder (5) is mounted so as to be movable along a fixed path.

11. Device according to any of claims 8 to 10, **characterised in that** the thermal-imaging camera (3) and/or the heat radiator (2) are pivotally mounted on the at least one holder (5).

12. Device according to any of claims 8 to 11, **characterised by** a measuring means which detects the position of the thermal-imaging camera (3) on the rotor blade (1).

13. Device according to claim 12, **characterised in that** the measuring means is designed as a GPS-based sensor means, a counter wheel or an evaluation means for a measured traverse rate of the thermal-imaging camera (3).

## Revendications

1. Procédé de détection de défauts dans des pales de rotor (1) réalisées dans une matrice de matière plastique par une méthode de stratification comportant une structure de couches ayant des nappes de fibres et/ou des matériaux sandwich,
dans lequel
la pale de rotor (1) est localement chauffée par un radiateur thermique (2) mené le long de la pale de rotor (1), l'emplacement chauffé est détecté au moins d'une caméra thermique (3) menée le long de la pale de rotor (1), et des irrégularités dans l'image thermique sont mises en évidence par des méthodes de traitement d'images ou d'analyse de signaux,
**caractérisé en ce que**
le radiateur thermique (2) et la caméra thermique (3) sont agencés sur au moins un support (5) monté de façon mobile sur une plateforme de travail (4), support qui est pressé contre la pale de rotor (1) par voie pneumatique, hydraulique ou par un accumulateur de force mécanique ayant un moyen de précontrainte (5a, 5b), pendant réchauffement et la détection, et la vitesse de déplacement de la plateforme de travail (4) et/ou la distance (D) du radiateur thermique (2) par rapport à la caméra thermique (3) est modifiée en fonction de la portée de profondeur requise de la détection.

2. Procédé selon la revendication 1, **caractérisé en ce qu'**une surface de contact ou un rouleau de contact (6) est agencé(e) sur ledit au moins un support (5), qui est mené(e) le long de la surface de la pale de rotor (1).

3. Procédé selon l'une des revendications précédentes, **caractérisé en ce que** le radiateur thermique (2) et la caméra thermique (3) sont déplacés à une distance constante par rapport à la surface de la pale de rotor.

4. Procédé selon l'une des revendications précédentes, **caractérisé en ce que** ledit au moins un support (5) est mené sur une trajectoire fixée le long de la pale de rotor (1) ou de l'axe longitudinal de la pale de rotor.

5. Procédé selon l'une des revendications précédentes, **caractérisé en ce que** la caméra thermique (3) accompagne le radiateur thermique (2) à une distance constante (D).

6. Procédé selon l'une des revendications précédentes, **caractérisé en ce que** des images ayant des défauts reconnus sont mémorisées séparément dans un fichier de défauts.

7. Procédé selon l'une des revendications précédentes, **caractérisé en ce que** la position de la caméra thermique (3) et/ou du radiateur thermique (2) sur la pale de rotor (1) est enregistrée et associée aux données d'image thermique.

8. Dispositif de détection de défauts dans des pales de rotor (1) réalisées dans une matrice de matière plastique par une méthode de stratification comportant une structure de couches ayant des nappes de fibres et/ou des matériaux sandwich, comportant un radiateur thermique (2) mené le long de la pale de rotor (1), et une caméra thermique (3) qui accompagne le radiateur thermique (2) et qui est couplée à un moyen d'évaluation, **caractérisé en ce que**
le radiateur thermique (2) et la caméra thermique (3) sont agencés sur au moins un support (5) monté de façon mobile sur une plateforme de travail (4), support auquel est associé un moyen de précontrainte (5a, 5b) pour presser le support (5) contre la pale de rotor (1), et la caméra thermique (3) est montée de façon mobile par rapport au radiateur thermique (2).

9. Dispositif selon la revendication 8, **caractérisé en ce que** le radiateur thermique (2) et/ou la caméra thermique (3) sont montés de façon mobile sur ledit au moins un support (5).

10. Dispositif selon l'une des revendications 8 ou 9, **caractérisé en ce que** ledit au moins un support (5) est monté de façon mobile le long d'une trajectoire fixée.

11. Dispositif selon l'une des revendications 8 à 10, **caractérisé en ce que** la caméra thermique (3) et/ou le radiateur thermique (2) sont montés de façon mobile en pivotement sur ledit au moins un support (5).

12. Dispositif selon l'une des revendications 8 à 11, **caractérisé par** un moyen de mesure qui détecte la position de la caméra thermique (3) sur la pale de rotor (1).

13. Dispositif selon la revendication 12, **caractérisé en ce que** le moyen de mesure est réalisé sous forme de moyen capteur à base GPS, sous forme de roue de comptage ou sous forme de moyen d'évaluation d'une vitesse de déplacement mesurée de la caméra thermique (3).
